# EUROPEAN PATENT SPECIFICATION

(11) **EP 2 893 792 B1**
(45) Date of publication and mention of the grant of the patent: **02.08.2017**
(21) Application number: 14196735.6
(22) Date of filing: 08.12.2014
(51) Int. Cl.: A01B 63/112, B60D 1/24, B60D 1/62

(54) **Draft force sensing system for an agricultural tractor**
Durchzugskraftmesssystem für Ackerschlepper
Système de détection de force de traction pour un tracteur agricole

(30) Priority: 19.12.2013 US 201314135298
(43) Date of publication of application: 15.07.2015
(73) Proprietor: Deere & Company, Moline, IL 61265 (US)
(72) Inventor: Tilkes, Andrew K., Cedar Falls, IA Iowa 50613 (US); Kosmicki, Peter A., Cedar Falls, IA Iowa 50613 (US); Kreis, Edwin R., Waterloo, IA Iowa 50703 (US); Earley, Mark S., Traer, IA Iowa 50675 (US); Carda, Charles H., Cedar Falls, IA Iowa 50613 (US)
(74) Representative: Dehnhardt, Florian Christopher

(56) References cited:
- US-A- 4 510 814
- US-A- 5 042 586
- US-B1- 8 496 068

## Description

The present invention refers to a draft force sensing system for an agricultural tractor.

Agricultural implements can be mounted directly to agricultural tractors using a conventional three point hitch. The three point hitch can be controlled by a hitch control system which raises and lowers the three point hitch in response to a number of sensed parameters, including a sensed draft force. Such hitch control systems can operate to lower and raise an agricultural implement while maintaining a constant load on the agricultural tractor. The agricultural implement is actually able to work at a deeper average depth as the agricultural tractor is able to operate at a higher average power with such hitch control system.

Various draft force sensing systems have been developed to provide a sensed draft force signal, see for instance US5042586. Certain current production draft force sensing systems have a number of moving parts that require periodical maintenance, including removing mud and dirt accumulation and lubrication of a draft sensor plunger to prevent moisture and dirt contamination. In certain conditions, the mud and dirt accumulation actually prevents component movement which causes false sensing of the draft force signals. Changes in tractor frame design will require new draft force sensing designs. Other current production draft force sensing systems have costly draft sensing pins, bending bars, and draft sensing shafts. Draft sensing pins require two instrument pins which double the cost and halve the reliability. The bending bar and draft sensing shaft systems have moving parts and require a sealed compartment and a fair amount of space. The zero load voltage for the system is set by adjusting the length of a spring steel strap that mounts over a sensor plunger and the ends of which are attached to the body of the shaft. The factory consistently has issues setting the voltage. The spring steel strap and sensor plunger produce an inconsistent voltage during spring steel strap adjustment. The current draft sensing system on 4WD agricultural tractors measures the deflection between the draft link mount straps. The components are open to the elements and exposed to mud, dirt, and debris.

It is desired to provide a draft force sensing system which can be installed within the space available in future production agricultural tractors. It is also desired to provide a draft force sensing system which is better protected from environmental contamination and which is sealed and less prone to accumulate debris.

These and other objects are achieved by the present invention, wherein a draft force sensing system for an agricultural tractor is provided. The draft force sensing system comprises a hitch frame adapted to be attached to a rear frame of the agricultural tractor. Left and right draft link supports couple a corresponding left and right draft link to a corresponding left and right side of the hitch frame. Left and right draft bars have a first part attached to a corresponding one of the left and right draft link supports. Each of the left and right draft bars have a second part positioned rearwardly and inwardly with respect to its first part. Draft forces applied by the left and right draft links to the left and right draft link supports deflect the second parts of the left and right draft bars. A draft force transducer generates a draft force signal in response to deflection thereof. A sensing unit deflects the draft force transducer in response to deflection of the second parts of the left and right draft bars.

For a complete understanding of the objects, techniques, and structure of the invention reference should be made to the following detailed description and accompanying drawings:
- Fig. 1: is a perspective rear view of a hitch frame for an agricultural tractor, wherein a conventional three point hitch is mounted to the hitch frame,
- Fig. 2: is a perspective bottom front view of the hitch frame with a draft force sensing system embodying the invention, wherein the draft force sensing system comprises a sensing unit,
- Fig. 2A: is a perspective bottom front view of the hitch frame with the draft force sensing system removed,
- Fig. 3: is a bottom view of the hitch frame of Fig. 1,
- Fig. 4: is a bottom perspective view of a portion of the hitch frame of Fig. 3,
- Fig. 5: is a sectional view along lines 5-5 of Fig. 4,
- Fig. 6: is perspective view of the draft force sensing system showing the sensing unit in more detail,
- Fig. 7: is a sectional view along lines 7-7 of Fig. 6, and
- Fig. 8: is a sectional view along lines 8-8 of Fig. 6.

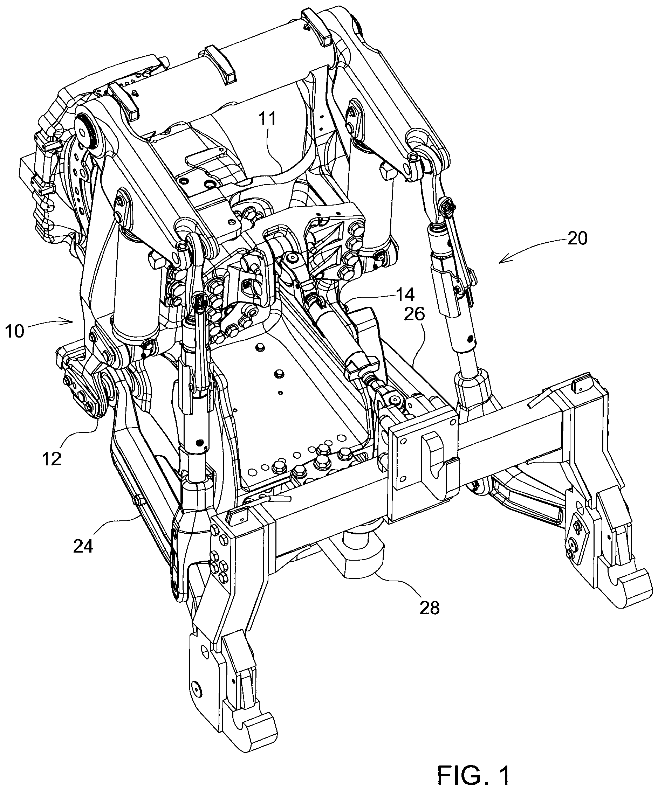

Referring to Figs. 1, 2 and 3, a hitch frame 10 is adapted to be attached to a rear end frame of a work vehicle, such as an agricultural tractor (not shown). The hitch frame 10 includes a main body 11 and left and right draft link supports or draft ears 12, 14. A conventional three point hitch 20 is mounted to the hitch frame 10, and includes left and right draft links 24, 26 which are coupled to the left and right draft ears 12, 14 in a known manner. A conventional drawbar 28 extends in a fore-and-aft direction below the hitch frame 10.

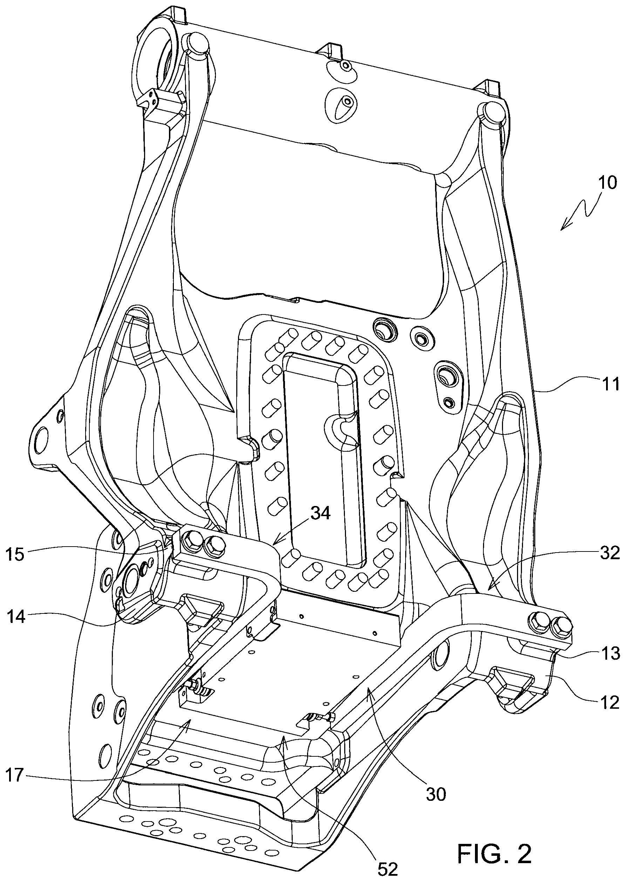

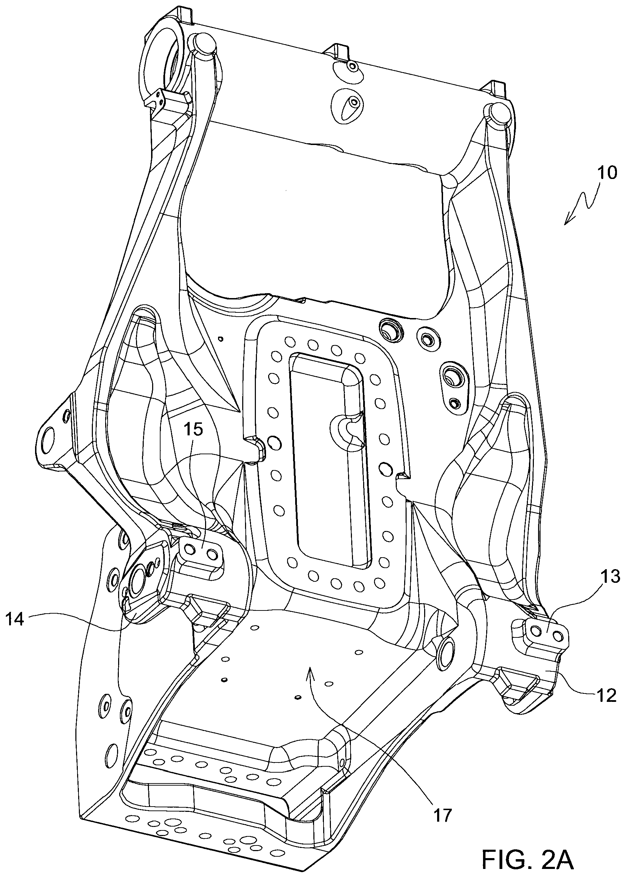

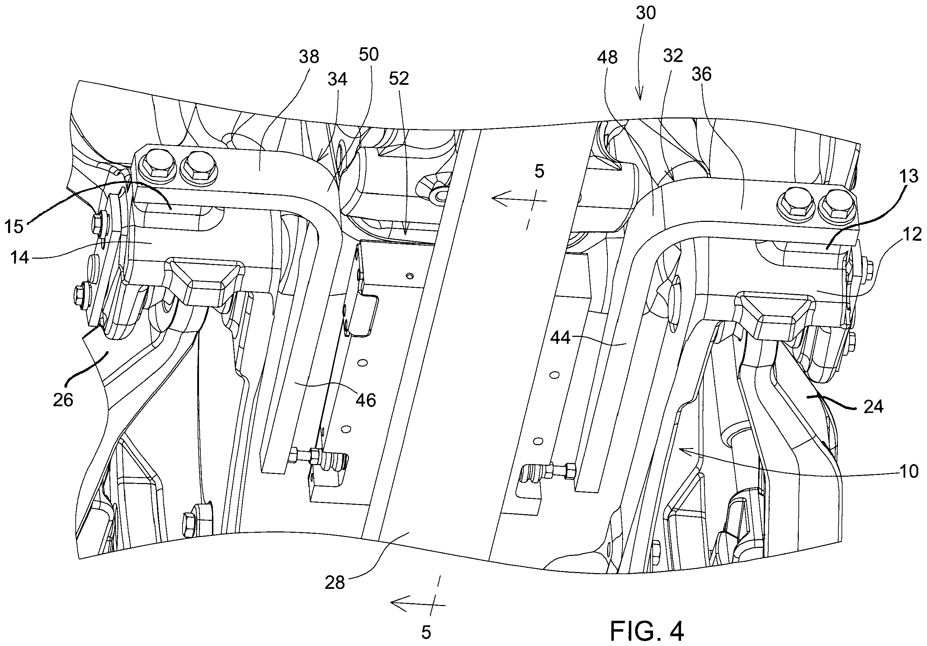

Referring now to Fig. 2A, each of the left and rights draft ears 12, 14 of the hitch frame 10 includes a corresponding forwardly facing mounting surface 13, 15. The hitch frame 10 forms a downwardly opening pocket 17 which extends rearwardly with respect to the left and right draft ears 12, 13. Referring now to Figs. 2 to 4, a draft force sensing system 30 senses draft forces which are applied to the left and right draft links 24, 26, and generates an electrical draft force signal. The draft force sensing system 30 includes left and right L-shaped draft bars 32, 34. Each of the left and right L-shaped draft bars 32, 34 includes a first part 36, 38 which is attached to the mounting surface 13, 15 of a corresponding one of the left and rights draft ears 12, 14. Each of the left and right L-shaped draft bars 32, 34 also has a second part 44, 46 positioned rearwardly and inwardly with respect to the corresponding first part 36, 38. The first parts 36, 38 project laterally outwardly and away from each other. Each second part 44, 46 extends rearwardly from an inner end of the corresponding first part 36, 38. Each first part 36, 38 is joined to the second part 44, 46 by a corresponding curved joint 48, 50.

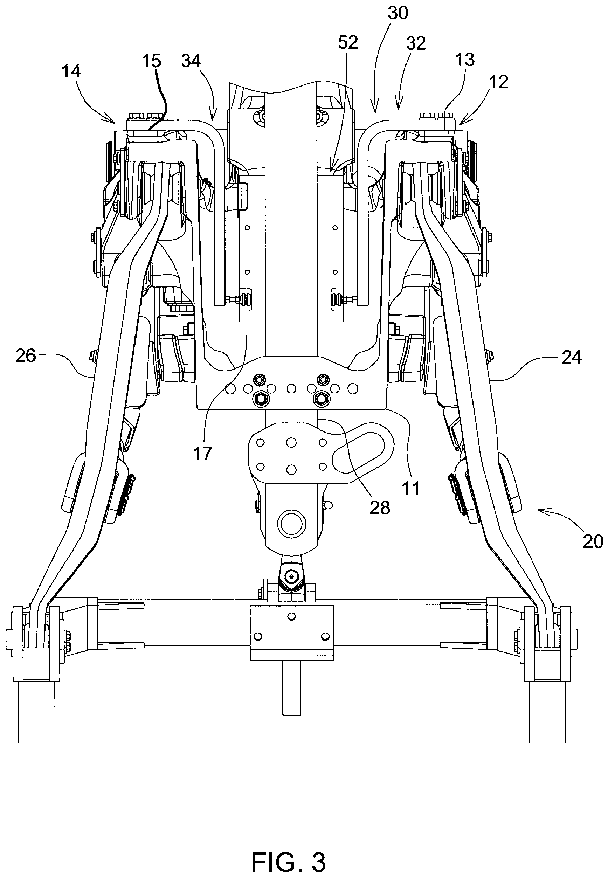

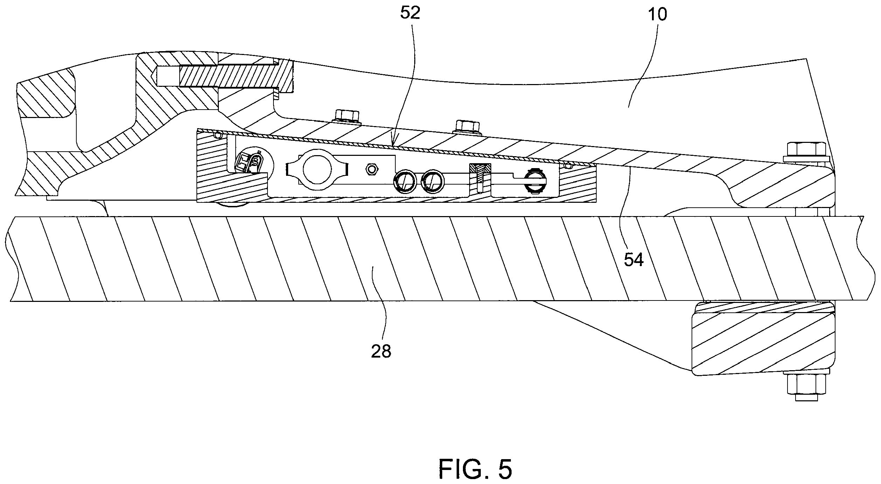

Referring now to Figs. 3 to 5, a sensing unit 52 is mounted in the pocket 17 and is attached to a downwardly facing surface 54 of the hitch frame 10 between the left and right L-shaped draft bars 32, 34 and between the drawbar 28 and the hitch frame 10.

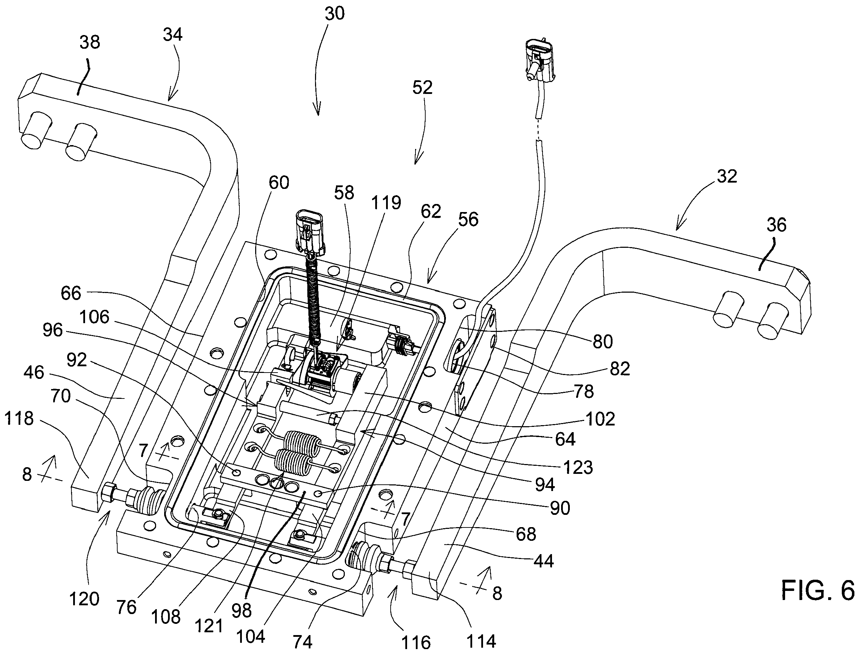

Referring now to Fig. 6, the sensing unit 52 includes a housing 56 which forms a cavity 58. The cavity 58 is surrounded by a seal groove 60 which receives a seal 62. The housing 56 forms a left side wall 64 and a right side wall 66. A left recess 68 is formed in the left side wall 64, and a right recess 70 is formed in the right side wall 66. Both recesses 68, 70 are near but spaced apart from a rear end of the housing 56. A left bore 74 communicates the cavity 58 with the left recess 68, and a right bore 76 communicates the cavity 58 with the right recess 70. A harness bore 78 communicates the cavity 58 with a harness recess 80 which is formed in the left side wall 64 near a forward end of the housing 56. Harness recess 80 is covered by a harness shield 82.

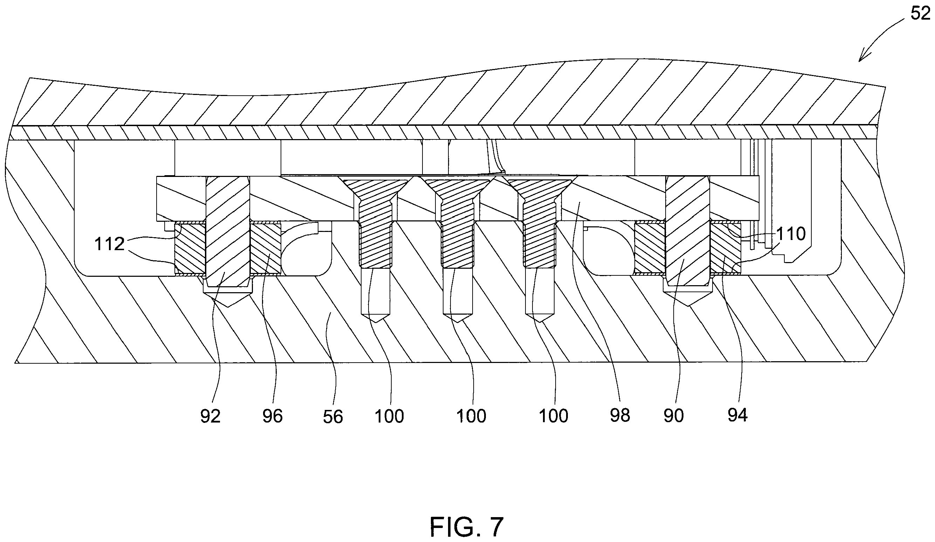

Referring now to Figs. 6, 7 and 8, the sensing unit 52 also includes a pair of laterally spaced apart pivot pins 90, 92 which are press-fit into bores in the housing 56. Left and right sensing arms 94, 96 are pivotally mounted on the corresponding pivot pins 90, 92. A bracing bar 98 receives both pivot pins 90, 92 and is bolted to the housing 56 by three bolts 100. Pivot pin 90 divides left sensing arm 94 into a longer arm portion 102 and a shorter arm portion 104. Pivot pin 92 divides right sensing arm 96 into a longer arm portion 106 and a shorter arm portion 108. Washers 110 are placed on pivot pin 90 on both sides of left sensing arm 94, and washers 112 are placed on pivot pin 92 on both sides of right sensing arm 96. Left shorter arm portion 104 is coupled to an end 114 of left L-shaped draft bar 32 by left sensing link 116. Right shorter arm portion 108 is coupled to an end 118 of right L-shaped draft bar 34 by right sensing link 120. The longer arm portions 102, 106 of the left and right sensing arms 94, 96 engage the ends of a draft force transducer or linear displacement transducer 119. The longer arm portions 102, 106 move away from each other and disengage from the linear displacement transducer 119 when draft force exceeds a threshold.

A resilient member 121 includes a pair of coil springs and is coupled to the longer arm portions 102, 106 of the left and right sensing arms 94, 96, and is biased to urge the longer arm portions 102, 106 towards each other. A stop member 123 is positioned between the longer arm portions 102, 106 and is engagable with the longer arm portions 102, 106 to limit movement of the longer arm portions 102, 106 towards each other.

The left and right sensing links 116, 120 extend transversely with respect to the fore-and-aft direction. The linear displacement transducer 119 has a first end coupled to longer arm portion 102 and a second end coupled to longer arm portion 106. Linear displacement transducer 119 generates an electrical draft force signal representing a distance between the second parts 44, 46, since the deflection of the left and right sensing arms 94, 96 is a function of the draft force applied to the left and right draft ears 12, 14. Thus, the sensing unit 52 mechanically sums deflection of the second portions 44, 46 of the left and right L-shaped draft bars 32, 34 and applies the summed deflection to the linear displacement transducer 119. The second parts 44, 46 move away from each other and disengage from the left and right sensing links 116, 120 when draft force is less than a threshold.

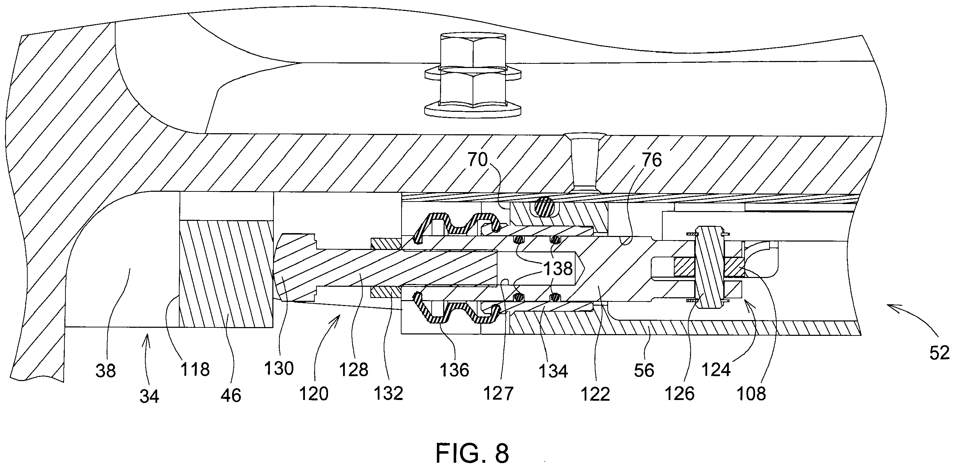

Referring now to Fig. 8, right sensing link 120 includes a stainless steel rod 122 which has a forked end 124 which is pivotally coupled to right shorter arm portion 108 by a pivot pin 126. Rod 122 includes a threaded central axial bore 127 which receives a threaded bolt 128 which has a bolt head 130 which engages the end 118 of right L-shaped draft bar 34. A backup nut 132 is threaded onto threaded bolt 128 to hold threaded bolt 128 in a proper position relative to rod 122. A hollow bronze bushing 134 is received in right bore 76 and the rod 122 is slidably received by the bushing 134. A bellows seal 136 has an inner end attached to the bushing 134 and an outer end attached to an outer end of the rod 122. A pair of O-ring seals 138 is mounted in grooves in an outer surface of rod 122 and provides a seal between the rod 122 and the bushing 134. Left sensing link 116 is a mirror image of right sensing link 120.

Viewing Fig. 6, an increase in substantially rearwardly directed draft forces will bend the left and right draft ears 12, 14 and cause the ends 114, 118 of the left and right L-shaped draft bars 32,34 to move inwardly and towards each other. This causes the longer arm portions 102, 106 of left and right sensing arms 94, 96 to move away from each other and increase the length of the linear displacement transducer 119. In fact, if the draft forces exceed a high threshold, the longer arm portions 102, 106 will disengage from the linear displacement transducer 119 and thereby protect the linear displacement transducer 119 from draft force overloads.

Also viewing Fig. 6, a decrease in draft forces (or a forwardly directed draft force) will cause the ends 114, 118 of the left and right L-shaped draft bars 32, 34 to move outwardly and away from each other. This causes the longer arm portions 102, 106 of left and right sensing arms 94, 96 to move towards each other and decrease the length of the linear displacement transducer 119. In fact, if the draft forces are less than a low threshold, the ends 114, 118 will disengage the bolt heads 130 of the left and right sensor links 116, 120, and thereby protect the linear displacement transducer 119 from draft force underloads.

This draft force sensing system 30 mechanically sums the horizontal draft load between the left and right draft links 24, 26 of the three point hitch 20. The left and right draft links 24, 26 are coupled to parts of the hitch frame 10 which are flexible in response to horizontal loads and is stiff in response to vertical loads. The structure of the hitch frame 10 and the placement of the left and right L-shaped draft bars 32, 34 maximizes the horizontal draft load and minimizes the vertical draft load to be sensed by linear displacement transducer 119. The draft force sensing system 30 requires very little space and does not require periodical lubrication and maintenance. The hitch frame 10 is a casting which deflects in response to draft force load. This deflection is transferred to the left and right L-shaped draft bars 32, 34 mounted on the hitch frame 10. The ends 114, 118 of the left and right L-shaped draft bars 32, 34 swing due to deflection and twisting of the hitch frame 10. The ends 114, 118 push against the bolt heads 130 which are connected to a linkage assembly in the sensing unit 52. The linkage assembly includes the left and right sensing arms 94, 96 which magnify the deflection. The linear displacement transducer 119 is mounted between the left and right sensing arms 94, 96, and is compressed or decompressed depending upon the draft force load applied to the hitch frame 10. The draft force sensing system 30 mechanically sums the draft force loads from both left and right draft links 24, 26 together, so that only a single linear displacement transducer 119 is required, thus increasing the reliability of the draft force sensing system 30.

## Claims

1. A draft force sensing system for an agricultural tractor, the draft force sensing system (30) comprising
a hitch frame (10) adapted to be attached to a rear frame of the agricultural tractor;
left and right draft link supports (12, 14), each of the left and right draft link supports (12, 14) coupling a corresponding left and right draft link (24, 26) to a corresponding left and right side of the hitch frame (10);
left and right draft bars (32, 34), each left and right draft bar (32, 34) having a first part (36, 38) attached to a corresponding one of the left and right draft link supports (12, 14), each of the left and right draft bars (32, 34) having a second part (44, 46) positioned rearwardly and inwardly with respect to its first part (36, 38),
draft forces applied by the left and right draft links (24, 26) to the left and right draft link supports (12, 14) deflecting the second parts (44, 46) of the left and right draft bars (32, 34);
**characterized by** a sensing unit (52) including a housing (56) that is sealed to protect the sensing unit (52) from dirt;
a left sensing link extending from the housing (56) through a left seal, the left sensing link configured to engage with the second part of the left draft bar;
a right sensing link extending from the housing (56) through a right seal, the right sensing link configured to engage with the second part of the right draft bar;
a linear displacement transducer (119) positioned in the housing (56); and
a linkage unit positioned in the housing and coupled to the left and right sensing links, the linkage unit configured to mechanically sum deflections of the second parts of the left and right draft bars via the left and right sensing links and apply a summed deflection to the linear displacement transducer (119).

2. The draft force sensing system according to claim 1, **characterized in that** the sensing unit (52) is contained in a housing (56) which is fixed to an underside of the hitch frame (10).

3. The draft force sensing system according to claim 1 or 2, **characterized in that** each of the left and right draft bars (32, 34) is L-shaped and its first part (36, 38) extends substantially perpendicularly with respect to its second part (44, 46).

4. The draft force sensing system according to claims 1 to 3, **characterized in that** each first part (36, 38) extends laterally outwardly from a forward end of the second part (44, 46).

5. The draft force sensing system according to claims 1 to 4, **characterized in that** each second part (44, 46) extends rearwardly from an inner end of the first part (36, 38).

6. The draft force sensing system according to claims 1 to 5, **characterized in that** each second part (44, 46) is positioned between a corresponding one of the left and right draft link supports (12, 14) and the hitch frame (10).

7. The draft force sensing system according to claims 1 to 6, **characterized in that** each first part (36, 38) is attached to a forward facing mounting surface (13, 15) of a corresponding one of the left and right draft link supports (12, 14).

8. The draft force sensing system according to claims 1 to 7, **characterized in that** the hitch frame (10) forms a downwardly opening pocket (17), wherein the draft force transducer (119) and the sensing unit (52) are received by said pocket (17).

9. The draft force sensing system according to claims 1 to 8, **characterized in that** the sensing unit (52) is positioned between the left and right draft bars (32, 34).

10. The draft force sensing system according to claims 1 to 9, **characterized in that** the sensing unit (52) is positioned between the left and right draft bars (32, 34) and between a drawbar (28) and the hitch frame (10).

## Patentansprüche

1. Zugkraftmesssystem für einen Ackerschlepper, wobei das Zugkraftmesssystem (30) Folgendes umfasst:
einen Anhängebock (10), der ausgelegt ist, um an einem Heckrahmen eines Ackerschleppers befestigt zu werden;
eine linke und eine rechte Zugverbindungsstütze (12, 14), wobei die linke und die rechte Zugverbindungsstütze (12, 14) jeweils eine entsprechende linke und rechte Zugverbindung (24, 26) mit einer entsprechenden linken und rechten Seite des Anhängebocks (10) koppeln;
eine linke und eine rechte Zustange (32, 34), wobei die linke und die rechte Zustange (32, 34) jeweils einen ersten Abschnitt (36, 38) aufweisen, der an einer entsprechenden der linken und der rechten Zugverbindungsstütze (12, 14) befestigt ist, wobei die linke und die rechte Zugstange (32, 34) jeweils einen zweiten Abschnitt (44, 46) aufweisen, der bezogen auf den ersten Abschnitt (36, 38) nach rückwärts und nach innen gewandt positioniert ist,
von der linken und der rechten Zugverbindung (24, 26) auf die linke und die rechte Zugverbindungsstütze (12, 14) ausgeübte Zugkräfte, die die zweiten Abschnitte (44, 46) der linken und der rechten Zugstange (32, 34) auslenken;
**gekennzeichnet durch** eine Messeinheit (52) mit einem Gehäuse (56), das abgedichtet ist, um die Messeinheit (52) vor Schmutz zu schützen;
eine linke Messverbindung, die sich vom Gehäuse (56) durch eine linke Abdichtung erstreckt, wobei die linke Messverbindung ausgelegt ist, um mit dem zweiten Abschnitt der linken Zugstange ineinander zu greifen;
eine rechte Messverbindung, die sich vom Gehäuse (56) durch eine rechte Abdeckung erstreckt, wobei die rechte Messverbindung ausgelegt ist, um mit dem zweiten Abschnitt der rechten Zugstange ineinander zu greifen;
einen im Gehäuse (56) positionierten Linearverschiebung-Messwandler (119); und
eine Verbindungseinheit, die im Gehäuse positioniert ist und mit der linken und der rechten Messverbindung gekoppelt ist, wobei die Verbindungseinheit ausgelegt ist, um Abweichungen der zweiten Abschnitte der linken und der rechten Zugstange mittels der linken und der rechten Messverbindung mechanisch zu summieren und eine summierte Abweichung auf den Linearverschiebung-Messwandler (119) anzuwenden.

2. Zugkraftmesssystem nach Anspruch 1, **dadurch gekennzeichnet, dass** die Messeinheit (52) in einem Gehäuse (56) enthalten ist, das an einer Unterseite des Anhängebocks (10) fixiert ist.

3. Zugkraftmesssystem nach Anspruch 1 oder 2, **dadurch gekennzeichnet, dass** jede der linken und der rechten Zugstange (32, 34) L-förmig ist und sich ihr erster Abschnitt (36, 38) bezogen auf ihren zweiten Abschnitt (44, 46) im Wesentlichen senkrecht erstreckt.

4. Zugkraftmesssystem nach den Ansprüchen 1 bis 3, **dadurch gekennzeichnet, dass** jeder der ersten Abschnitte (36, 38) sich von einem vorderen Ende des zweiten Abschnitts (44, 46) seitlich auswärts erstreckt.

5. Zugkraftmesssystem nach den Ansprüchen 1 bis 4, **dadurch gekennzeichnet, dass** jeder der zweiten Abschnitte (44, 46) sich von einem inneren Ende des ersten Abschnitts (36, 38) rückwärts gewandt erstreckt.

6. Zugkraftmesssystem nach den Ansprüchen 1 bis 5, **dadurch gekennzeichnet, dass** jeder der zweiten Abschnitte (44, 46) zwischen einer entsprechenden der linken und der rechten Zugverbindungsstütze (12, 14) und dem Anhängebock (10) positioniert ist.

7. Zugkraftmesssystem nach den Ansprüchen 1 bis 6, **dadurch gekennzeichnet, dass** jeder der ersten Abschnitte (36, 38) an einer vorwärts gerichteten Montagefläche (13, 15) einer entsprechenden der linken und der rechten Zugverbindungsstütze (12, 14) befestigt ist.

8. Zugkraftmesssystem nach den Ansprüchen 1 bis 7, **dadurch gekennzeichnet, dass** der Anhängebock (10) eine sich abwärts öffnende Mulde (17) bildet, wobei der Zugkraftmesswandler (119) und die Messeinheit (52) von der Mulde (17) aufgenommen werden.

9. Zugkraftmesssystem nach den Ansprüchen 1 bis 8, **dadurch gekennzeichnet, dass** die Messeinheit (52) zwischen der linken und der rechten Zugstange (32, 34) positioniert ist.

10. Zugkraftmesssystem nach den Ansprüchen 1 bis 9, **dadurch gekennzeichnet, dass** die Messeinheit (52) zwischen der linken und der rechten Zugstange (32, 34) und zwischen einer Deichsel (28) und dem Anhängebock (10) positioniert ist.

## Revendications

1. Système de détection de force de traction pour un tracteur agricole, le système de détection de force de traction (30) comprenant :
un cadre d'attelage (10) conçu pour être fixé à un cadre arrière du tracteur agricole ;
des supports de liaison de traction (12, 14) gauche et droite, chacun des supports de liaison de traction (12, 14) gauche et droite couplant une liaison de traction (24, 26) gauche et droite correspondante à un côté gauche et droit correspondant du cadre d'attelage (10) ;
des barres de traction (32, 34) gauche et droite, chaque barre de traction (32, 34) gauche et droite ayant une première partie (36, 38) fixée à un support correspondant parmi les supports de liaison de traction (12, 14) gauche et droite, chacune des barres de traction (32, 34) gauche et droite ayant une seconde partie (44, 46) positionnée vers l'arrière et vers l'intérieur par rapport à sa première partie (36, 38) ; les forces de traction appliquées par les liaisons de traction (24, 26) gauche et droite aux supports de liaison de traction (12, 14) gauche et droite déviant les secondes parties (44, 46) des barres de traction (32, 34) gauche et droite ;
**caractérisé par** une unité de détection (52) comprenant un carter (56) fermé de façon étanche pour protéger l'unité de détection (52) de la poussière ;
une liaison de détection gauche s'étendant hors du carter (56) à travers un joint gauche, la liaison de détection gauche étant configurée pour entrer en prise avec la seconde partie de la barre de traction gauche ; une liaison de détection droite s'étendant hors du carter (56) à travers un joint droit, la liaison de détection droite étant configurée pour entrer en prise avec la seconde partie de la barre de traction droite ;
un transducteur de déplacement linéaire (119) positionné dans le carter (56) ; et
une unité de connexion positionnée dans le carter et couplée aux liaisons de détection gauche et droite, l'unité de connexion étant configurée pour additionner mécaniquement des déflexions des secondes parties des barres de traction gauche et droite via les liaisons de détection gauche et droite et pour appliquer une déflexion additionnée au transducteur de déplacement linéaire (119).

2. Système de détection de force de traction selon la revendication 1, **caractérisé en ce que** l'unité de détection (52) est contenue dans un carter (56) fixé à un côté inférieur du cadre d'attelage (10).

3. Système de détection de force de traction selon la revendication 1 ou 2, **caractérisé en ce que** chacune des barres de traction (32, 34) gauche et droite est en forme de L et que sa première partie (36, 38) s'étend sensiblement perpendiculairement par rapport à sa seconde partie (44, 46).

4. Système de détection de force de traction selon les revendications 1 à 3, **caractérisé en ce que** chaque première partie (36, 38) s'étend en côté vers l'extérieur à partir d'une extrémité avant de la seconde partie (44, 46).

5. Système de détection de force de traction selon les revendications 1 à 4, **caractérisé en ce que** chaque seconde partie (44, 46) s'étend vers l'arrière hors d'une extrémité intérieure de la première partie (36, 38).

6. Système de détection de force de traction selon les revendications 1 à 5, **caractérisé en ce que** chaque seconde partie (44, 46) est positionnée entre un support correspondant parmi les supports de liaison de traction (12, 14) gauche et droite et le cadre d'attelage (10).

7. Système de détection de force de traction selon les revendications 1 à 6, **caractérisé en ce que** chaque première partie (36, 38) est fixée à une surface de fixation (13, 15) orientée vers l'avant d'un support correspondant parmi les supports de liaison de traction (12, 14) gauche et droite.

8. Système de détection de force de traction selon les revendications 1 à 7, **caractérisé en ce que** le cadre d'attelage (10) forme une poche d'ouverture (17) vers le bas, dans lequel le transducteur de force de traction (119) et l'unité de détection (52) sont reçus par ladite poche (17).

9. Système de détection de force de traction selon les revendications 1 à 8, **caractérisé en ce que** l'unité de détection (52) est positionnée entre les barres de traction (32, 34) gauche et droite.

10. Système de détection de force de traction selon les revendications 1 à 9, **caractérisé en ce que** l'unité de détection (52) est positionnée entre les barres de traction (32, 34) gauche et droite et entre une barre de traction (28) et le cadre d'attelage (10).
